# NOUVEAU FASCICULE DE BREVET EUROPEEN

(11) **EP 2 569 130 B2**
(45) Date de publication et mention de la décision concernant l'opposition: **26.07.2017**
(45) Mention de la délivrance du brevet: 02.04.2014
(21) Numéro de dépôt: 11725486.2
(22) Date de dépôt: 13.05.2011
(51) Int. Cl.: B25J 9/16, G05B 19/408

(54) **PROCÉDÉ DE COMMANDE D'UNE CELLULE DE TRAVAIL AUTOMATISÉE**
VERFAHREN ZUR STEUERUNG EINER AUTOMATISIERTEN ARBEITSZELLE
METHOD FOR CONTROLLING AN AUTOMATED WORK CELL

(30) Priorité: 14.05.2010 FR 1053769
(43) Date de publication de la demande: 20.03.2013
(73) Titulaire: Staubli Faverges, 74210 Faverges (FR)
(72) Inventeur: JOLY, Luc, F-74210 Faverges (FR); BONNET DES TUVES, Jean Michel, F-74210 Saint Ferreol (FR); PERTIN, François, F-74940 Annecy Le Vieux (FR); VOGT, Gérald, F-74210 Lathuile (FR)
(74) Mandataire: Lavoix
(86) Numéro de dépôt international: PCT/FR2011/051076
(87) Numéro de publication internationale: WO 2011/141683

(56) Documents cités:
- WO-A2-2006/062948
- US-A1- 2004 267 404

## Description

L'invention concerne un procédé de commande d'une cellule de travail comprenant un robot, une centrale de commande, un dispositif de contrôle du robot et un bus de communication entre la centrale de commande et le dispositif de contrôle du robot.

Dans le domaine du pilotage de bras robotisés, il est connu qu'une centrale de commande communique, par l'intermédiaire d'un bus, avec des contrôleurs d'axes adaptés pour piloter des moteurs permettant de mouvoir les différentes parties d'un robot. Une telle centrale de commande interprète les consignes de mouvement données par un utilisateur ou un programme créé par l'utilisateur, de façon à définir des consignes de mouvement de chacun des axes de mouvement du robot.

WO-A-2006/062948 décrit un procédé de commande d'un bras de robot suivant plusieurs axes de commande comprenant une centrale de commande qui transmet des commandes de mouvement destinées au robot dans son ensemble via un bus à une unité de calcul appartenant au dispositif de contrôle du bras robot. Cette unité de calcul va traduire tes commandes de mouvement reçus en ordres de mouvement pour les différents contrôleurs de moteurs.

Les mouvements des parties du robot par rapport aux différents axes sont calculés au niveau de la centrale de commande en appliquant un modèle géométrique inverse qui dépend du type de bras de robot utilisé. Pour déplacer effectivement les différentes parties du robot, chacun des moteurs se voit ordonner des déplacements correspondant aux consignes de mouvement d'axes. Ces déplacements sont calculés en appliquant le modèle cinématique des transmissions propre au bras de robot qui tient compte des rapports de réductions et d'éventuelles équations de couplage. Il est en effet courant que le déplacement d'un axe soit le résultat de la commande de deux ou plusieurs moteurs.

Dans la mesure où chaque robot comporte des caractéristiques cinématiques spécifiques, il est nécessaire d'incorporer à la centrale de commande des caractéristiques inhérentes au type de robot utilisé tels que le modèle cinématique inverse et le modèle cinématique des transmissions. Ceci a pour effet de rendre les programmes incorporés à la centrale de commande relativement complexes et peu versatiles puisqu'ils doivent être modifiés si le type de robot utilisé change.

De plus, les programmes mis en oeuvre par la centrale de commande doivent traiter les contraintes de fonctionnement liées à la spécificité d'un bras de robot qui fait que chaque commande ou évènement concernant un moteur peut nécessiter un traitement qui implique les autres moteurs du bras de robot. Par exemple, en cas de défaillance d'un des moteurs du bras de robot, les autres moteurs doivent être stoppés et l'ensemble des moteurs du bras de robot doit être déclaré hors service.

C'est à ces inconvénients qu'entend remédier l'invention en proposant un nouveau procédé de commande d'une cellule de travail automatisée, permettant de simplifier la programmation de la centrale de commande, d'améliorer la vitesse de communication avec les différents contrôleurs d'axes ainsi que d'améliorer la précision de la commande du robot.

A cet effet, l'invention concerne un procédé de commande selon la revendication 1.

Le pilotage d'un bras de robot s'appuie sur l'identification d'axes de commande de mouvement, c'est-à-dire des grandeurs géométriques telles que des longueurs ou des angles qui permettent d'exprimer le mouvement de l'extrémité du bras de robot.

Grâce à l'invention, le programmeur, de la centrale de commande peut considérer chacun des axes de commande de mouvement du bras de robot comme un axe indépendant avec lequel il communique de la même façon qu'avec un contrôleur d'axe d'un autre moteur qui ne ferait pas partie d'un bras de robot. La présence de l'unité de calcul dans le dispositif de contrôle du robot permet de simplifier la programmation de la centrale de commande, dans la mesure où celle-ci n'a pas à incorporer des données spécifiques à chaque bras de robot et ne doit pas gérer la communication avec chacun des contrôleurs de moteurs.

Suivant une première possibilité, chaque axe de commande de mouvement du bras de robot correspond à un degré de liberté du bras de robot. Le programmeur de la centrale de calcul est alors dispensé de la connaissance du modèle cinématique des transmissions.

Suivant une deuxième possibilité, chaque axe de commande de mouvement du bras de robot correspond à un axe cartésien ou une rotation correspondante de déplacement de l'extrémité du bras de robot. Le programmeur de la centrale de commande est alors dispensé de la connaissance du modèle géométrique inverse du bras de robot. Ce modèle est appliqué au niveau de l'unité de calcul appartenant au dispositif de contrôle du bras de robot. Le programmeur peut envisager de changer de type de bras de robot sans avoir à remettre à jour un modèle cinématique inverse mise en oeuvre par la centrale de commande.

Selon des caractéristiques avantageuses mais non obligatoires de l'invention, un tel procédé de commande peut incorporer une ou plusieurs des caractéristiques suivantes, prises avec toute combinaison techniquement admissible :
- Le procédé comprend des étapes supplémentaires consistant à d) déterminer, au sein de l'unité de calcul et à partir des consignes reçues de la centrale de commande, des ordres pour le moteur piloté par chaque contrôleur de moteur ; e) transmettre à chaque contrôleur de moteur un ordre, déterminé à l'étape d), pour le moteur piloté par ce contrôleur de moteur. Comme la détermination des consignes incluant les calculs des ordres de mouvement pour chacun des moteurs du robot est effectuée, dans l'unité de calcul qui appartient au dispositif de contrôle du robot, en prenant en compte l'ensemble des consignes émises par la centrale de commande, on peut optimiser le fonctionnement du robot et de la cellule de travail robotisée. De plus, l'unité de calcul met en oeuvre les traitements imposés par la spécificité d'un bras de robot. Elle épargne ainsi au programmeur de la cellule de la centrale de commande la nécessité d'incorporer des procédures d'arrêt ou de démarrage sophistiquées qui relèvent du savoir faire des roboticiens.
- Le procédé comprend des étapes supplémentaires consistant à : f) transmettre, à partir de chaque contrôleur de moteur et à destination de l'unité de calcul, la position du moteur qu'il pilote ; g) calculer, au sein de l'unité de calcul et sur la base de l'ensemble des positions des moteurs, les positions de chacun des axes de commande de mouvement du bras de robot ; et h) transmettre à la centrale de commande les positions de chacun des axes de commande calculées à l'étape g).
- Le procédé comprend des étapes supplémentaires consistant à i) calculer, au sein de l'unité de calcul et sur la base de l'ensemble des positions des moteurs, la vitesse cartésienne d'un point caractéristique ; j) comparer la vitesse cartésienne calculée à une valeur de seuil ; k) transmettre à partir de l'unité de calcul et à destination de la centrale de commande un signal d'alerte si la vitesse cartésienne est supérieure à la valeur de seuil.
- A l'étape d) des ordres de mouvements comprenant les positions à atteindre pour chaque moteur pour respecter les consignes émises par la centrale de commande sont calculés.
- A l'étape d), le calcul des ordres de mouvements pour chaque moteur s'accompagne d'une prévision du couple à fournir pour chaque moteur, basée sur les consignes émises par la centrale de commande.
- Les consignes émises par la centrale de commande contiennent des informations sur la charge transportée pour au moins un axe de commande de mouvement.
- Les positions à atteindre pour chaque moteur pour respecter les consignes émises par la centrale de commande incluent une compensation des déformations du bras de robot calculée à partir d'au moins une partie des prévisions de couple.
- Le procédé comprend une étape consistant à : I) transmettre à la centrale de commande un signal représentatif de l'état de mise sous tension du robot, dans lequel le robot est respectivement déclaré comme prêt à fonctionner ou mis hors tension, seulement si tous les moteurs sont mis sous tension ou mis hors tension et freinés.
- Le procédé comporte une étape consistant à : m) transmettre, à partir de l'unité de calcul et à destination de la centrale de commande, un signal représentatif de l'état de fonctionnement de toutes les parties du robot, dans lequel toutes les parties du robot sont déclarées comme étant en défaut, si au moins une de ces parties est détectée comme ne fonctionnant pas.
- Le bus fonctionne sur un modèle d'interface de type SERCOS.
- La centrale de commande communique avec les contrôleurs d'axes fictifs associés aux axes de commande de mouvement du bras de robot en utilisant les commandes du profil de matériel « Profile drive ». Ces commandes standard associées au profil de matériel « profile drive » sont largement utilisées pour la programmation des contrôleurs d'axe isolés. Le programmeur n'a pas à développer ou à utiliser des commandes spécifiques pour mettre en oeuvre un bras de robot dans une cellule de travail automatisée.

L'invention sera mieux comprise et d'autres avantages de celle-ci apparaîtront plus clairement à la lumière de la description qui va suivre d'un procédé de commande d'une cellule de travail automatisée conforme à son principe, donnée uniquement à titre d'exemple et faite en référence aux dessins annexés dans lesquels :
- la figure 1 est un schéma structurel d'une cellule de travail automatisée mettant en oeuvre un procédé de commande conforme à l'invention ;
- la figure 2 est un schéma fonctionnel de principe qui fait apparaître les fonctions principales et les flux de communication en relation avec le procédé de commande conforme à l'invention.

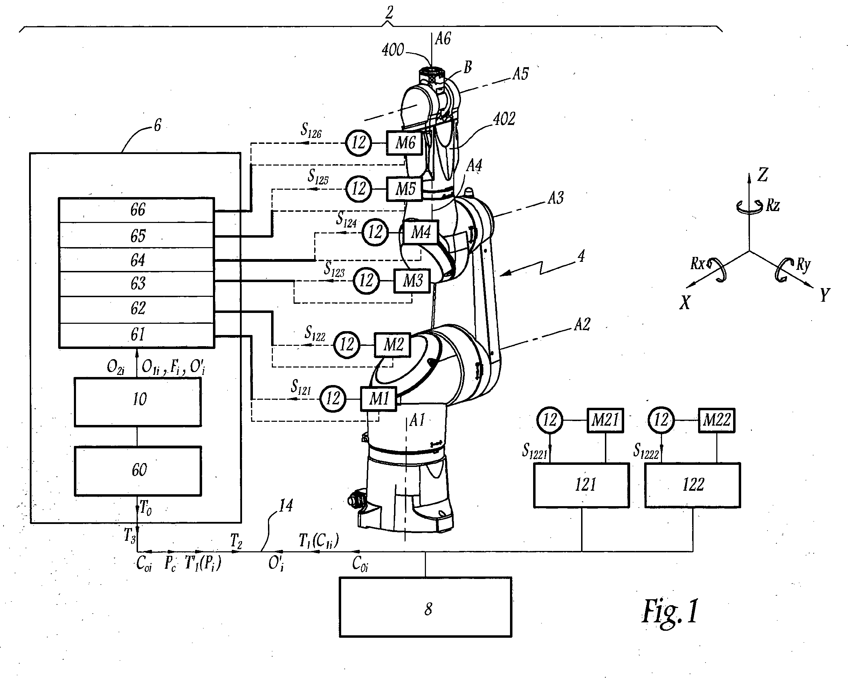

Comme représenté à la figure 1, une cellule de travail automatisée 2 comprend un bras de robot 4, un dispositif 6 de contrôle du bras de robot 4, une centrale de commande 8 ainsi que deux actionneurs électriques partiellement représentés. Le bras de robot 4 est ici constitué par un bras robotisé à six axes référencés A1 à A6. Le terme « axe » est ici utilisé au sens robotique, c'est-à-dire concerne un degré de liberté. Dans le cas d'espèce, les degrés de liberté ou axes A1 à A6 sont des rotations.

Le dispositif 6 de contrôle du robot est disposé à proximité du bras de robot 4 et comprend six contrôleurs de moteurs 61 à 66. Chacun de ces contrôleurs de moteurs 61 à 66 est adapté pour piloter le fonctionnement d'un moteur M1 à M6 apte à manoeuvrer une partie du bras de robot 4.

L'actionnement du moteur M1 permet la rotation d'ensemble de la partie du bras de robot 4 située entre l'axe A1 et l'extrémité mobile du bras de robot 4 sans qu'aucun autre axe ne tourne sur lui-même. De même, l'actionnement des moteurs M2, M3, M4 et M6 permettent respectivement la rotation isolée des axes A2, A3, A4 et A6. En revanche, l'actionnement du moteur M5 a pour conséquence la rotation des axes A5 et A6. Il existe un couplage entre les axes A5 et A6 et une rotation isolée de l'axe A5 requiert l'actionnement des moteurs M5 et M6. Chacun des moteurs M1 à M6 est équipé d'un codeur 12 placé sur l'arbre du moteur, permettant de mesurer la position angulaire de l'arbre du moteur et de délivrer un signal électrique S₁₂ᵢ, pour i entier entre 1 et 6, contenant l'information de cette position. Chacun des deux actionneurs électriques est manoeuvré par un moteur M21 et M22, chacun de ces moteurs étant respectivement piloté par un contrôleur d'axe 121 et 122 et associé à un codeur 12 qui délivre un signal de position S₁₂₂₁ ou S₁₂₂₂.

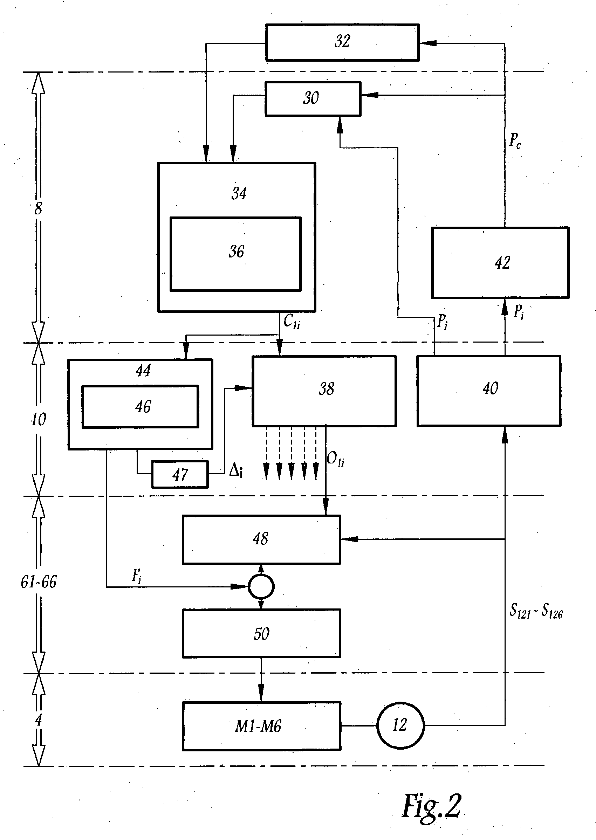

Comme représenté schématiquement à la figure 2, la centrale de commande 8 commande le fonctionnement de la cellule automatisée 2 à partir de programmes 30 créés par des utilisateurs pour la réalisation d'actions précises, comme par exemple l'assemblage d'un objet nécessitant des mouvements du bras de robot 4 et d'éventuelles actions d'un préhenseur ou d'un convoyeur qui comprend les actionneurs électriques manoeuvrés par les moteurs M21 et M22. Par exemple, de tels programmes peuvent contenir des suites de coordonnées cartésiennes à atteindre par l'extrémité du bras de robot 4.

En variante, les actions peuvent être décidées en temps réel par l'utilisateur à partir d'un panneau de contrôle 32 fixe ou portatif accessible à l'utilisateur ou au programmeur de la cellule de travail automatisée 2.

La centrale de commande 8 communique avec le dispositif de contrôle 6 par l'intermédiaire d'un bus de terrain 14, fonctionnant de préférence sur le modèle d'interface temps réel série SERCOS III. La centrale de commande 8 est « maître » alors que le dispositif de contrôle 6 est « esclave ».

Le dispositif de contrôle 6 comporte une carte de communication 60 dédiée à la communication avec la centrale de commande 8 par l'intermédiaire du bus de terrain 14.

Le dispositif de contrôle 6 comporte également une unité de calcul 10, dont la fonction est d'assurer l'élaboration et la transmission de consignes telles que des ordres de mouvements ou de mise sous tension vers les contrôleurs de moteurs 61 à 66. L'unité de calcul 10 comprend notamment à cet effet des microprocesseurs et des mémoires. L'unité de calcul 10 est adaptée pour communiquer avec chacun des contrôleurs de moteurs 61 à 66. De cette façon, chaque transmission de données entre les contrôleurs de moteurs 61 à 66 et la centrale de commande 8 est gérée par l'unité de calcul 10, aussi bien des contrôleurs de moteurs vers la centrale que de la centrale vers les contrôleurs de moteurs.

Les axes de commande du bras de robot 4 sont choisis comme étant les axes A1 à A6 qui correspondent aux degrés de liberté du bras de robot 4.

Lors de la phase d'initialisation propre au modèle d'interfaçage SERCOS III, la communication est définie de sorte que chaque axe A1 à A6 du bras de robot 4 est associé à un contrôleur d'axe fictif. Ces contrôleurs d'axes fictifs sont censés recevoir des consignes de la centrale de commande 8, de la même façon que des contrôleurs d'axes génériques et piloter au moins un moteur sur la base de ces consignes. Ils sont déclarés comme conformes au profil de matériel « Profil drive » qui définit un ensemble de commandes pour la configuration, le pilotage, l'interrogation des états et des positions, le diagnostic et la supervision. Les consignes élaborées par la centrale de commande 8 sur la base des commandes associées au profil de matériel « Profil drive » et exploitables par les contrôleurs d'axe fictifs sont réceptionnées par l'unité de calcul 10. Chaque contrôleur d'axe fictif se voit attribuer une adresse au même titre que les deux contrôleurs d'axe 121 et 122 qui commandent les actionneurs extérieurs au bras de robot 4 et présents dans la cellule de travail automatisée 2.

Le procédé de commande selon l'invention s'applique à la phase de mise sous tension de tous les moteurs du bras de robot 4 préalable à toute opération du bras de robot de la cellule de travail automatisée 2. Cette mise sous tension est initiée par la centrale de commande 8 qui émet sur le bus 14 un ou plusieurs télégrammes de données maître comportant des consignes Cₒᵢ, avec i entre 1 et 6, de mise sous tension de chacun des axes A1 à A6. La carte de communication 60 du dispositif de contrôle 6 capte ces télégrammes. Elle adresse alors des demandes d'interruption à l'unité de calcul 10 qui récupère ces télégrammes, en extrait les consignes Cₒᵢ pour chacun des axes A1 à A6 du bras de robot 4 et procède à leur traitement. Le protocole d'interfaçage SERCOS III prévoit que chacun des dispositifs connectés sur le bus 14 est instruit de la localisation des données qui le concernent dans un télégramme de données maître. L'unité de calcul 10 enregistre les consignes de mise sous tension et émet un télégramme de réponse à destination de la centrale de commande 8 dans lequel les axes concernés par la consigne sont déclarés comme étant mis sous tension. Les moteurs ne sont réellement mis sous tension et les freins desserrés qu'après réception de la dernière consigne de mise sous tension émise par la centrale de commande 8. Des ordres de mise sous tension O₂ᵢ, avec i entre 1 et 6, pour chaque moteur M1 à M6 sont envoyés par l'unité de calcul 10 à chaque contrôleur de moteur 61 à 66. Lorsque tous les moteurs sont mis sous tension et lorsque l'unité de calcul 10 a reçu des contrôleurs de moteurs 61 à 66 l'information que chacun des moteurs M1 à M6 est sous tension, un télégramme T₀, indiquant à la centrale de commande 8 que le dernier axe est prêt à fonctionner, est émis par l'unité de calcul 10, à travers la carte 60.

Pour le programmeur de la centrale de commande 8, les ordres de mise sous tension des moteurs M1 à M6 des axes A1 à A6 du bras de robot 4 sont semblables à ceux de mise sous tension des autres moteurs M21 et M22 mis en oeuvre dans la cellule automatisée 2 puisque les axes du bras de robot 4 et les deux autres axes sont connus de la centrale de commande 8 comme conformes au profil de matériel « Profile drive ». Comme l'unité de calcul 10 considère l'ensemble des consignes destinées à chacun des axes A1 à A6 du bras de robot 4 pour gérer la mise sous tension des différents moteurs, la programmation de la centrale de commande 8 est simplifiée.

Lorsque la cellule automatisée 2 réalise le processus qu'elle automatise, la centrale de commande 8 exécute un programme de fonctionnement 30 qui contient des ordres de mouvement que le robot doit exécuter. A chaque cycle de communication, les consignes de mouvement C₁ᵢ, avec i entre 1 et 6 pour chaque axe A1 à A6 associé à un contrôleur d'axe fictif du bras de robot 4 sont calculées par un générateur de trajectoire 34 qui met en oeuvre un modèle géométrique inverse 36 lorsque les ordres de mouvement du bras de robot 4 expriment les coordonnées cartésiennes d'un déplacement de son extrémité. Conformément au protocole d'interfaçage SERCOS III, pour chaque cycle de communication défini, l'intégralité des consignes C₁ᵢ de mouvements d'axes est envoyée sur le bus sous la forme d'un télégramme de données maître T₁(C₁ᵢ). La carte de communication 60 reçoit ce télégramme. Elle adresse alors une demande d'interruption à l'unité de calcul 10 qui récupère le télégramme, en extrait les consignes C₁ᵢ de mouvements d'axes et procède à leur traitement.

Lors de ce traitement, l'unité de calcul 10 calcule des ordres de mouvements O₁ᵢ, avec i entre 1 et 6, pour chacun des moteurs M1 à M6 pilotés par les contrôleurs de moteurs 61 à 66. Les ordres de mouvements O₁ᵢ pour chacun des moteurs sont calculés à partir de l'ensemble des consignes C₁ᵢ reçues en provenance de la centrale de commande 8 en appliquant le modèle cinématique des transmissions 38. Ces ordres comprennent les positions à atteindre pour les moteurs. Le calcul prend alors en compte le couplage existant entre l'axe A5 et l'axe A6, le mouvement de l'axe A5 nécessitant la mise en oeuvre des moteurs M5 et M6. Le calcul des ordres de mouvement O₁ᵢ pour chaque moteur tient également compte des rapports de réduction entre les moteurs et les axes de rotation de robot.

Les ordres de mouvements O₁ᵢ pour chaque moteur M1 à M6 sont transmis au contrôleur de moteurs 61 à 66 de chacun des moteurs qui, se chargent de déterminer et de réguler le courant d'alimentation des phases des moteurs.

La position angulaire des arbres de chaque moteur est détectée grâce au codeur 12 placé sur l'arbre de chaque moteur. Cette information transmise à chaque contrôleur de moteur sous la forme de signaux S₁₂₁ à S₁₂₆ permet l'asservissement 48 du courant d'alimentation des phases des moteurs.

L'unité de calcul 10 dispose également au travers de ses connections avec les contrôleurs de moteurs 61 à 66 de la position angulaire des arbres de chaque moteur du bras de robot 4 et calcule les positions angulaires Pᵢ, avec i entier entre 1 et 6, des parties mobiles autour des axes A1 à A6 du bras de robot 4 en appliquant un modèle cinématique inverse des transmissions 40. Du fait du couplage des axes A5 et A6, les positions angulaires des arbres des moteurs M5 et M6 interviennent dans la détermination de la position angulaire P₆ de l'axe A6. L'unité de calcul 10 peut également, à partir des mesures, calculer les vitesses de rotation des parties mobiles autour des axes du robot, les couples fournis lors de ces mouvements, ou toute autre donnée utile.

Dès lors et suivant le protocole de communication SERCOS III, à chaque cycle de communication synchrone, l'unité de calcul 10 du robot élabore un télégramme de données T'₁ qui contient les positions angulaires Pᵢ des axes du bras de robot 4 et le transmet à la centrale de commande 8 au travers de la carte de communication 60. Ces informations sont alors exploitables par le programme 30 qui régit le fonctionnement de la cellule automatisée 2. La centrale de commande 8 peut appliquer un modèle géométrique direct 42 pour obtenir par exemple la position cartésienne P_{c} de l'extrémité du bras de robot 4 qui pourra ensuite être affichée sur le panneau de contrôle 32.

L'unité de calcul 10 peut calculer la position cartésienne d'au moins un point caractéristique B, par exemple situé sur une bride d'outil 400 à l'extrémité du bras de robot 4, à partir des positions angulaires Pᵢ, avec i entier entre 1 et 6, des parties mobiles autour des axes A1 à A6 du bras de robot 4 et en déduire la vitesse cartésienne V(B) de ce point caractéristique. Une comparaison avec un seuil prédéfini est faite au niveau de l'unité de calcul 10. Si la valeur de vitesse cartésienne V(B) de ce point caractéristique B est plus grande que ce seuil, l'unité de calcul 10 émet une commande d'arrêt à destination de tous les contrôleurs de moteur 61 à 66 et envoie à la centrale de commande 8, un télégramme pour signaler l'erreur.

En variante, l'unité de calcul 10 calcule la vitesse cartésienne V(B) du point caractéristique à partir des consignes de mouvement C₁ᵢ, avec i entre 1 et 6 pour chaque axe A1 à A6 associé à un contrôleur d'axe fictif du bras de robot 4.

Le comportement du bras de robot 4 est sensiblement amélioré si l'asservissement de chaque moteur tient compte d'une prédiction du couple Fᵢ, avec i entre 1 et 6, appliqué aux articulations du fait de la gravité ou des efforts d'inertie. Cette prédiction de couple Fᵢ est établie pour chaque moteur du bras de robot 4 au niveau de l'unité de calcul 10 qui met en oeuvre un modèle dynamique 44. Le modèle dynamique s'appuie sur la connaissance des consignes de mouvement C₁ᵢ de chaque axe qui permettent d'évaluer les accélérations requises au niveau de chaque partie du bras de robot 4. Compte tenu de la structure du bras de robot 4, la prédiction du couple Fᵢ sur l'arbre de chaque moteur du bras de robot 4 doit prendre en compte les consignes de mouvement C₁ᵢ de tous les axes A1 à A6. Une fois la prédiction de couple Fᵢ établie, elle est traduite en consigne de courant en appliquant les données ou « constantes » 46 des moteurs et transmise aux contrôleurs de moteurs 61 à 66 pour être incorporée en entrée des boucles de contrôle 50 des courants d'alimentation des phases des moteurs.

Suivant une variante, le calcul de la prévision du couple Fᵢ à fournir au niveau de chaque articulation peut utiliser également les positions angulaires Pᵢ des axes du bras de robot 4.

La prédiction du couple Fᵢ, avec i entre 1 et 6, appliquée aux articulations et d'autant plus précise qu'elle prend en compte les charges à transporter par le bras de robot 4. Chaque charge est caractérisée par une masse, la position de son centre de gravité et sa matrice d'inertie mais également le degré de liberté auquel elle est attachée. Le programmeur de la centrale de commande 8 peut déclarer les charges transportées par rapport à chaque axe de commande de mouvement du bras de robot 4. Par exemple, pour une charge transportée au niveau de la bride d'outil 400, il déclarera une charge à travers les commandes dédiées à l'axe de commande A6. Pour une charge transportée au niveau de l'avant bras 402, il déclarera une charge à travers les commandes dédiées à l'axe de commande A4. Ces déclarations de charge transportées peuvent se faire de manière asynchrone, c'est-à-dire en dehors de la communication cyclique entre la centrale de commande 8 et l'unité de calcul 10. Elles peuvent également se faire de manière synchrone, ce qui permet de faire varier la charge transportée à chaque commande envoyée par la centrale de commande 8 et d'adapter le pilotage du bras de robot 4 à une séquence de mouvements au cours de laquelle le bras de robot saisirait et transporterait une charge avant de la relâcher et entreprendre un autre déplacement.

Le procédé selon l'invention permet la prise en compte des charges transportées, au niveau de l'unité de calcul 10 de façon à simplifier la formation de la centrale de commande 8.

Le procédé selon l'invention permet également une amélioration de la précision de la trajectoire d'un outil non représenté placé à l'extrémité du bras de robot 4 en prenant en compte les déformations du bras de robot sous l'effet de la charge. Ces déformations peuvent résulter de la flexibilité des éléments de structure comme les bras ou les éléments de transmission comme les courroies ou les réducteurs. A partir des consignes de mouvement de chaque axe, le modèle dynamique 44 prédit chaque couple Fᵢ, avec i entre 1 et 6, appliqué aux articulations du fait de la gravité et des efforts d'inertie. Ces couples Fᵢ permettent d'obtenir, en appliquant une matrice de flexibilité propre au bras de robot 4, les déviations articulaires Δi, avec i entre 1 et 6, dûes aux déformations. Les déviations articulaires Δi permettant d'apporter une compensation aux déformations du bras de robot 4, et sont alors ajoutées aux consignes de mouvement de chaque axe et donc prises en compte dans le calcul des ordres de mouvement O₁ᵢ, avec i entre 1 et 6, pour chacun des moteurs M1 à M6 pilotés par les contrôleurs de moteur 61 à 66.

Ces déviations articulaires Δi sont également retranchées aux positions angulaires Pi, avec i entier entre 1 et 6, des parties mobiles autour des axes A1 à A6 du bras de robot 4, qui proviennent de l'application du modèle cinématique inverse de transmission 40 aux positions angulaires des arbres de chaque moteur du bras de robot 4.

En variante, le calcul des déviations articulaires Δi peut être établi en ne prenant en compte que la partie des couples Fi correspondant à la gravité, c'est-à-dire aux efforts statiques.

Le procédé selon l'invention prend également en compte les éventuels défauts de fonctionnement de chacune des parties du robot 4. L'unité de calcul 10 du dispositif de contrôle 6 du bras de robot 4 supervise le fonctionnement de l'ensemble des contrôleurs de moteurs 61 à 66. Il met en oeuvre des logiciels qui permettent de détecter les défauts de fonctionnement au niveau des contrôleurs de moteurs 61 à 66, des moteurs M1 à M6 ou des codeurs 12. Dans le cas où une panne d'un moteur se produit, l'unité de calcul 10 procède à l'arrêt de tous les autres moteurs du bras de robot 4 et commande l'émission, à destination de la centrale de commande 8, d'un télégramme de données T₂ dans lequel non seulement l'axe dont la rotation est normalement permise par le moteur en question est déclaré comme étant en défaut de fonctionnement, mais également tous les axes du bras de robot 4. En d'autres termes, un défaut de fonctionnement sur l'un des axes du bras de robot 4 entraîne la déclaration de l'impossibilité de fonctionner de l'ensemble du bras de robot. Cette information est envoyée à la centrale de commande 8.

Dans la mesure où la centrale de commande 8 n'a pas à gérer la mise en défaut de tous les axes du robot, sa programmation est simplifiée. Cela permet d'éviter la communication entre chaque contrôleur de moteurs 61 à 66 et la centrale de commande 8, ce qui accélère le traitement des défauts et améliore la sécurisation du bras de robot 4.

Comme il vient d'être décrit, l'unité de calcul 10 assure la cohérence du comportement du bras de robot 4 en cas de défaut sur l'un des axes A1 à A6. Il en est de même lors de la mise hors tension d'un des axes du bras de robot 4. Chacun des moteurs M1 à M6 doit alors nécessairement être mis hors tension. De plus, pour des raisons de sécurité, la mise hors tension d'un moteur doit être précédée du serrage de freins permettant d'arrêter la rotation des moteurs. La consigne de mise hors tension du bras de robot 4 en provenance de la centrale de commande 8 est appliquée par l'unité de calcul 10 à chacun des contrôleurs de moteurs. Dès qu'une consigne, de mise hors tension d'un des axes Ai, avec i entier entre 1 et 6 du bras de robot 4, est détectée par l'unité de calcul 10, cette consigne est généralisée à tous les moteurs M1 à M6 du bras de robot 4 L'unité de calcul 10 envoie alors à chaque contrôleur de moteur 61 à 66 un ordre O'ᵢ, avec i entre 1 et 6, de mise hors tension des moteurs M1 à M6. Lors de la coupure effective du courant, l'unité de calcul 10 s'assure que les arbres de chacun des moteurs du bras de robot 4 sont bien freinés afin d'éviter tout accident. Lorsque toutes les vérifications sont effectuées, l'unité de calcul 10, émet, un télégramme T₃ spécifiant à la centrale de commande 8 que tous les axes Ai, avec i entier entre 1 et 6, du bras de robot 4 ont été mis hors tension.

Le procédé de l'invention permet l'amélioration de la synchronisation des mouvements gérés par la centrale de commande 8. Il s'appuie sur un modèle de communication client-serveur dans lequel la centrale de commande 8 est le serveur. Le bus 14 permet un mode de communication synchrone. La communication entre la centrale de commande 8 et le dispositif de contrôle 6 du bras de robot 4 par l'intermédiaire du bus 14 se fait à une fréquence, dite fréquence de communication, dont la valeur est adaptée au nombre de dispositifs, tels que les contrôleurs de moteurs, à commander.

L'unité de calcul 10 fonctionne à une fréquence, dite fréquence de contrôle, dont la valeur est plus élevée que celle de la fréquence de communication.

L'asservissement effectué au sein d'un contrôleur de moteurs 61 à 66 se fait à une fréquence, dite fréquence d'asservissement, dont la valeur est plus élevée que celle de la fréquence de contrôle. Des calculs d'interpolations sont donc nécessaires entre chaque transmission d'ordre de mouvement O₁ᵢ pour les moteurs de l'unité dé calcul 10 au contrôleur de moteur. Ces calculs sont effectués, au sein de chaque contrôleur de moteurs 61 à 66.

Le programme de fonctionnement de la cellule de travail automatisée 2 mis en oeuvre par la centrale de commande 8 génère des consignes C₁ᵢ et nécessite la connaissance des positions angulaires Pᵢ des axes du bras de robot 4. A chaque transmission de consigne C₁ᵢ, la centrale de commande 8 demande les positions angulaires de chacun des axes du bras de robot 4. L'unité de calcul 10 dispose des positions des arbres de chaque moteur grâce aux codeurs 12. Elles lui proviennent des contrôleurs de moteurs 61 à 66 et lui permettent de calculer les positions angulaires Pᵢ des axes du bras de robot 4 en appliquant le modèle cinématique inverse des transmissions 40. Ces traitements et ces transmissions de données génèrent des délais susceptibles de désynchroniser l'unité de calcul 10 et la centrale de commande 8. Pour éviter cette désynchronisation, l'unité de calcul 10 date les informations de position angulaire en provenance des contrôleurs de moteurs 61 à 66. Chaque mesure de la position angulaire de l'arbre du moteur détectée par les codeurs 12 est donc associée à une date de mesure. Comme la communication par le bus 14 est de type synchrone, l'unité de calcul 10 sait à quel moment elle devra émettre les valeurs de position angulaire Pᵢ des axes du bras de robot 4 à la demande de la centrale de commande 8. Elles sont alors corrigées en fonction de la date de mesure, en fonction du mouvement présumé du bras du robot 4 au moment de la mesure et de l'intervalle de temps séparant la date de mesure de la date de transmission à la centrale de commande 8. L'unité de calcul 10 effectue une synchronisation.

Dans une autre variante, le procédé selon l'invention peut être mis eh oeuvre avec un bus CAN (Controller area network) qui intègre une couche applicative, CANopen. Il est également compatible avec les protocoles de communication Powerlink et EtherCAT.

Selon une autre variante, les axes de commande de mouvement du bras de robot 4 sont choisis comme étant les axes cartésiens X, Y, Z, et les rotations correspondantes Rx, Ry, Rz au lieu des axes A1 à A6 du bras de robot 4. Le programmeur de la centrale de commande 8 exprime alors les déplacements souhaités de l'extrémité du bras de robot 4 suivant 3 directions X, Y et Z et l'orientation de l'extrémité du bras de robot 4 suivant les rotations Rx, Ry et Rz autour des axes X, Y et Z. Dans ce cas, la centrale de commande 8 transmet au dispositif de contrôle 6 du bras de robot 4 des positions cartésiennes à atteindre. Cela permet de simplifier la programmation de la centrale de commande 8, dans la mesure où il n'est pas nécessaire d'inclure dans celle-ci les caractéristiques spécifiques au robot commandé. L'unité de calcul 10 incorpore le modèle géométrique inverse du bras de robot 4 et le met en oeuvre pour déterminer les consignes de déplacement à destination des contrôleurs de moteurs 61 à 66. De même, l'unité de calcul 10 incorpore et met en oeuvre le modèle géométrique direct qui permet de calculer avant de transmettre à la centrale de commande 8 les positions des axes de commande de mouvement X, Y, Z, et les rotations correspondantes Rx, Ry, Rz à partir des positions angulaires des arbres de chaque moteur du bras de robot 4.

L'invention ne se limite pas à l'utilisation d'un robot à 6 degrés de liberté et peut s'appliquer par exemple à des robots à 7 degrés de liberté. Dans ce cas, le programmeur pourra avantageusement choisir comme axes de commande de mouvement les axes cartésiens X, Y, Z, et les rotations correspondantes Rx, Ry, Rz de déplacement de l'extrémité du bras de robot. L'unité de calcul du dispositif de contrôle du bras de robot mettra en oeuvre le modèle géométrique inverse sophistiqué permettant de résoudre les redondances.

L'invention a été décrite avec un dispositif de contrôle du robot 6 qui comprend une carte de communication 60, une unité de calcul 10 et des contrôleurs de moteurs 61 à 66. L'unité de calcul 10 est apte à traiter les informations en provenance de la centrale de commande 8 et générer des consignes de déplacement à destination des contrôleurs de moteurs 61 à 66. Ces contrôleurs de moteurs 61 à 66 sont fonctionnellement assimilables à des contrôleurs d'axe usuels tels que les contrôleurs d'axe 121 et 122. Ils reçoivent des consignes de position et assurent le pilotage asservi des courants qui alimentent les phases des actionneurs électriques. Cependant, l'invention s'applique également à une structure qui met en oeuvre une unité de calcul directement capable de générer les consignes de courant à destination de cartes de puissance non représentées. Ces cartes de puissance sont aptes à contrôler les courants circulants dans les phases de un ou plusieurs actionneurs électriques. L'invention n'est pas limitée par la structure du dispositif de contrôle 6 du bras de robot 4.

Selon une variante de l'invention, les ordres pour chacun des moteurs M1 à M6 piloté par un contrôleur de moteur sont déterminés à partir de plusieurs, et non de l'ensemble, des consignes C₁ᵢ, avec i entier entre 1 et 6, reçues de la centrale de commande 8.

## Revendications

1. Procédé de commande d'une cellule de travail (2) automatisée comprenant
- au moins un bras de robot (4) avec au moins trois degrés de liberté pilotés suivant plusieurs axes de commande (A1-A6 ; X, Y, Z, Rx, Ry, Rz),
- une centrale de commande (8),
- un dispositif (6) de contrôle du bras de robot (4), incluant plusieurs contrôleurs de moteur (61-66) pilotant chacun le fonctionnement d'un moteur (M1-M6) adapté pour manoeuvrer au moins une partie du bras de robot (4),
- un bus (14) de communication entre la centrale de commande (8) et le dispositif de contrôle du bras de robot (4),
**caractérisé en ce que** :
- la centrale de commande (8) est apte à commander le fonctionnement de la cellule de travail (2) automatisée à partir de programmes (30),
- **en ce que** le bus (14) est un bus de terrain supportant un mode de communication synchrone,
- le procédé comprend des étapes consistant à :
a) associer à chaque axe de commande de mouvement (A1-A6 ; X, Y, Z, Rx, Ry, Rz) du bras de robot (4) un contrôleur d'axe fictif censé recevoir des consignes de mouvement émises par un générateur de trajectoire (34) de la centrale de commande (8) et piloter au moins un moteur en fonction de ces consignes ;
b) calculer, au niveau de la centrale de commande (8) et pour chaque axe de commande de mouvement (A1-A6 ; X, Y, Z, Rx, Ry, Rz) du bras de robot (4), des consignes (C₁ᵢ) destinées au contrôleur d'axe fictif correspondant à chacun de ces axes ;
c) transmettre, à travers le bus de terrain (14), les consignes (C₁ᵢ) déterminées à l'étape b), de la centrale de commande (8) à une unique unité de calcul (10) appartenant au dispositif (6) de contrôle du bras de robot (4).

2. Procédé de commande selon la revendication 1, **caractérisé en ce que** chaque axe de commande de mouvement du bras de robot (4) correspond un degré de liberté (A1-A6) du bras de robot.

3. Procédé de commande selon la revendication 1, **caractérisé en ce que** chaque axe de commande de mouvement du bras de robot (4) correspond à un axe cartésien (X, Y, Z) ou une rotation correspondante (Rx, Ry, Rz) de déplacement de l'extrémité du bras de robot.

4. Procédé de commande selon une des revendications précédentes, **caractérisé en ce qu'**il comprend des étapes supplémentaires consistant à :
d) déterminer au sein de l'unité de calcul (10) et à partir des consignes (C₁ᵢ) reçues de la centrale de commande (8), des ordres (O₁ᵢ, O₂ᵢ, O'ᵢ) pour le moteur (M1-M6) piloté par chaque contrôleur de moteur (61-66) ;
e) transmettre à chaque contrôleur de moteur (61-66) un ordre (O₁ᵢ, O₂ᵢ, O'ᵢ), déterminé à l'étape d), pour le moteur (M1-M6) piloté par ce contrôleur de moteur.

5. Procédé de commande selon une des revendications précédentes, **caractérisé en ce qu'**il comprend des étapes supplémentaires consistant à :
f) transmettre à partir de chaque contrôleur de moteur (61-66) et à destination de l'unité de calcul (10), la position du moteur (M1-M6) qu'il pilote ;
g) calculer, au sein de l'unité de calcul (10) et sur la base de l'ensemble des positions des moteurs, les positions (Pᵢ) de chacun des axes de commande de mouvement du bras de robot (4) ;
h) transmettre à la centrale de commande (8) les positions (Pᵢ) de chacun des axes de commande calculées à l'étape g).

6. Procédé de commande selon la revendication 5, **caractérisé en ce qu'**il comprend des étapes supplémentaires consistant à :
i) calculer, au sein de l'unité de calcul (10) et sur la base de l'ensemble des positions des moteurs, la vitesse cartésienne (V(B)) d'un point caractéristique (B) ;
j) comparer la vitesse cartésienne (V(B)) calculée à une valeur de seuil ;
k) transmettre à partir de l'unité de calcul (10) et à destination de la centrale de commande (8) un signal d'alerte si la vitesse cartésienne (V(B)) est supérieure à la valeur de seuil.

7. Procédé de commande selon la revendication 4, **caractérisé en ce qu'**à l'étape d) des ordres de mouvements (O₁ᵢ) comprenant les positions à atteindre pour chaque moteur (M1-M6) pour respecter les consignes (C₁ᵢ) émises par la centrale de commande (8) sont calculés.

8. Procédé de commande selon la revendication 7, **caractérisé en ce qu'**à l'étape d), le calcul des ordres de mouvements (O₁ᵢ) pour chaque moteur (M1-M6) s'accompagne d'une prévision (Fᵢ) du couple à fournir pour chaque moteur, basée sur les consignes (C₁ᵢ) émises par la centrale de commande (8).

9. Procédé de commande selon la revendication 8, **caractérisé en ce que** les consignes (C1i) émises par la centrale de commande (8) contiennent des informations sur la charge transportée pour au moins un axe de commande de mouvement (A1-A6).

10. Procédé de commande selon l'une des revendications 8 et 9, **caractérisé en ce que** les positions à atteindre pour chaque moteur (M1-M6) pour respecter les consignes (C1i) émises par la centrale de commande (8) incluent une compensation (Δi) des déformations du bras de robot (4) calculée à partir d'au moins une partie des prévisions de couple (Fi).

11. Procédé de commande selon l'une des revendications précédentes, **caractérisé en ce qu'**il comprend une étape consistant à :
I) transmettre à la centrale de commande (8) un signal (T₀, T₃) représentatif de l'état de mise sous tension du bras de robot (4), dans lequel le bras de robot (4) est respectivement déclaré comme prêt à fonctionner ou mis hors tension seulement si tous les moteurs (M1-M6) sont mis sous tension ou mis hors tension et freinés.

12. Procédé de commande selon l'une des revendications précédentes, **caractérisé en ce qu'**il comporte une étape consistant à :
m) transmettre à partir de l'unité de calcul (10) et à destination de la centrale de commande (8) un signal (T₂) représentatif de l'état de fonctionnement de toutes les parties du bras de robot (4), dans lequel toutes les parties du bras de robot (4) sont déclarées comme étant en défaut si au moins une de ces parties est détectée comme ne fonctionnant pas.

13. Procédé de commande selon l'une des revendications précédentes, **caractérisé en ce que** le bus (14) fonctionne sur un modèle d'interface de type SERCOS.

14. Procédé de commande selon la revendication 12, **caractérisé en ce que** la centrale de commande (8) communique avec les contrôleurs d'axes fictifs associés aux axes de commande de mouvement du bras de robot (4) en utilisant les commandes du profil de matériel « Profile drive ».

## Patentansprüche

1. Verfahren zur Steuerung einer automatisierten Arbeitskabine (2), die umfasst
- mindestens einen Roboterarm (4) mit mindestens drei Freiheitsgraden, die gemäß mehreren Steuerachsen (A1-A6, X, Y, Z, Rx, Ry, Rz) gesteuert werden
- eine Steuerzentrale (8),
- eine Vorrichtung (6) zur Steuerung des Roboterarms (4), die mehrere Motorsteuerungen (61-66) einschließt, die jeweils die Funktionsweise eines Motors (M1-M6) steuern, der geeignet ist, mindestens einen Teil des Roboterarms (4) zu betätigen,
- einen Kommunikationsbus (14) zwischen der Steuerzentale (8) und der Vorrichtung zur Steuerung des Roboterarms (4),
**dadurch gekennzeichnet, dass**:
die Steuerzentrale (8) geeignet ist, die Funktionsweise der automatisierten Arbeitskabine (2) über Programme (30) zu steuern,
dass der Bus (14) ein Feldbus ist, der einen synchronen Kommunikationsmodus über Kommunikationszyklen unterstützt,
das Verfahren Schritte umfasst, die darin bestehen:
a) Zuordnen zu jeder Steuerachse der Bewegung (A1-A6; X, Y, Z, Rx, Ry, Rz) des Roboterarms (4) einer fiktiven Achsensteuerung, die von einem Laufbahngenerator (34) der Steuerzentrale (8) ausgegebene Bewegungssollwerte empfangen soll, und Steuern mindestens eines Motors abhängig von diesen Sollwerten;
b) in der Steuerzentrale (8) und für jede Steuerachse der Bewegung (A1-A6; X, Y, Z, Rx, Ry, Rz) des Roboterarms (4) Berechnen von Sollwerten (C₁ᵢ), die für die fiktive Achsensteuerung entsprechend jeder dieser Achsen bestimmt sind;
c) Übertragen der im Schritt b) bestimmten Sollwerte (C₁ᵢ) über einen Feldbus von der Steuerzentrale an eine einzige Berechnungseinheit (10), die zu der Vorrichtung (6) zur Steuerung des Roboterarms (4) gehört.

2. Verfahren zur Steuerung nach Anspruch 1, **dadurch gekennzeichnet, dass** jede Steuerachse der Bewegung des Roboterarms (4) einem Freiheitsgrad (A1-A6) des Roboterarms entspricht.

3. Verfahren zur Steuerung nach Anspruch 1, **dadurch gekennzeichnet, dass** jede Steuerachse der Bewegung des Roboterarms (4) einer kartesischen Achse (X, Y, Z) oder einer entsprechenden Rotation (Rx, Ry, Rz) der Fortbewegung des Endes des Roboterarms entspricht.

4. Verfahren zur Steuerung nach einem der vorhergehenden Ansprüche, **dadurch gekennzeichnet, dass** es zusätzliche Schritte umfasst, die darin bestehen:
d) Bestimmen von Befehlen (O₁ᵢ, O₂ᵢ, O'ᵢ) für den Motor (M1-M6), der von jeder Motorsteuerung (61-66) gesteuert wird, in der Berechnungseinheit (10) und aus den Sollwerten (C₁ᵢ), die von der Steuerzentrale (8) empfangen wurden;
e) Übertragen an jede Motorsteuerung (61-66) eines Befehls (O₁ᵢ, O₂ᵢ, O'ᵢ), der im Schritt d) für den Motor (M1-M6) bestimmt wurde, der von dieser Motorsteuerung gesteuert wird.

5. Verfahren zur Steuerung nach einem der vorhergehenden Ansprüche, **dadurch gekennzeichnet, dass** es zusätzliche Schritte umfasst, die darin bestehen:
f) Übertragen von jeder Motorsteuerung (61-66) an die Berechnungseinheit (10) der Position des Motors (M1-M6), die sie steuert;
g) Berechnen der Positionen (Pᵢ) jeder der Steuerachsen der Bewegung des Roboterarms (4) in der Berechnungseinheit (10) und auf der Basis der Gesamtheit der Positionen der Motoren;
h) Übertragen der Positionen (Pᵢ) jeder der Steuerachsen, die in dem Schritt g) berechnet wurden, an die Steuerzentrale (8).

6. Verfahren zur Steuerung nach Anspruch 5, **dadurch gekennzeichnet, dass** es zusätzliche Schritte umfasst, die darin bestehen:
i) Berechnen der kartesischen Geschwindigkeit (V(B)) eines charakteristischen Punktes (B) in der Berechnungseinheit (10) und auf der Basis der Gesamtheit der Positionen der Motoren;
j) Vergleichen der berechneten kartesischen Geschwindigkeit (V(B)) mit einem Schwellenwert;
k) Übertragen eines Alarmsignals an die Steuerzentrale (8), wenn die kartesische Geschwindigkeit (V(B)) höher ist als der Schwellenwert von der Berechnungseinheit (10).

7. Verfahren zur Steuerung nach Anspruch 4, **dadurch gekennzeichnet, dass** bei dem Schritt d) Bewegungsbefehle (O₁ᵢ) berechnet werden, die die für jeden Motor (M1-M6) zu erreichenden Positionen umfassen, um die Sollwerte (C₁ᵢ) zu erfüllen, die von der Steuerzentrale (8) ausgegeben werden.

8. Verfahren zur Steuerung nach Anspruch 7, **dadurch gekennzeichnet, dass** bei dem Schritt d) die Berechnung der Bewegungsbefehle (O₁ᵢ) für jeden Motor (M1-M6) von einer Vorgabe (Fᵢ) des an jeden Motor zu liefernden Moments basierend auf den von der Steuerzentrale (8) abgegebenen Sollwerten (C₁ᵢ) begleitet wird.

9. Verfahren zur Steuerung nach Anspruch 8, **dadurch gekennzeichnet, dass** die von der Steuerzentrale (8) gelieferten Sollwerte (C₁ᵢ) Informationen über die zu transportierende Last für mindestens eine Steuerachse der Bewegung (A1-A6) enthalten.

10. Verfahren zur Steuerung nach einem der Ansprüche 8 und 9, **dadurch gekennzeichnet, dass** die für jeden Motor (M1-M6) zu erreichenden Positionen, um die von der Steuerzentrale (8) gelieferten Sollwerte (C₁ᵢ) zu erfüllen, eine Kompensation (Δi) der Verformungen des Roboterarms (4) einschließen, die aus mindestens einem Teil der Momentenvorgaben (Fi) berechnet wird.

11. Verfahren zur Steuerung nach einem der vorhergehenden Ansprüche, **dadurch gekennzeichnet, dass** es einen Schritt umfasst, der darin besteht:
I) Übertragen eines Signals (T₀, T₃) an die Steuerzentrale (8), das repräsentativ für den Zustand des Anlegens von Spannung an den Roboterarm (4) ist, wobei der Roboterarm (4) jeweils als zum Betrieb bereit erklärt wird oder von der Spannung abgeschaltet wird, nur wenn alle Motoren (M1-M6) mit Spannung versorgt werden oder von der Spannung abgeschaltet und gebremst werden.

12. Verfahren zur Steuerung nach einem der vorhergehenden Ansprüche, **dadurch gekennzeichnet, dass** es einen Schritt aufweist, der darin besteht:
m) Übertragen eines Signals (T₂) von der Berechnungseinheit (10) an die Steuerzentrale (8), das repräsentativ für den Betriebszustand aller Teile des Roboterarms (4) ist, wobei alle Teile des Roboterarms (4) als fehlerhaft deklariert werden, wenn mindestens eines dieser Teile als nicht funktionierend detektiert wird.

13. Verfahren zur Steuerung nach einem der vorhergehenden Ansprüche, **dadurch gekennzeichnet, dass** der Bus (14) mit einem Schnittstellentyp SERCOS arbeitet.

14. Verfahren zur Steuerung nach Anspruch 12, **dadurch gekennzeichnet, dass** die Steuerzentrale (8) mit der Berechnungseinheit (10) kommuniziert, indem Steuerbefehle des Materialprofils "Profile drive" verwendet werden.

## Claims

1. Method of controlling an automated work cell (2) comprising
- at least one robot arm (4) with at least three degrees of freedom controlled according to several control axes (A1-A6; X, Y, Z, Rx, Ry, Rz),
- a control center (8),
- a device (6) controlling the robot arm (4), including several motor controllers (61-66) each controlling the functioning of a motor (M1-M6) able to manoeuver at least a part of the robot arm (4),
- a bus (14) for communication between the control center (8) and the control device of the robot arm (4),
**characterised in that**:
- the control center (8) is able to control the functioning of the automated work cell (2) from programs (30);
- **in that** the bus (14) is a field bus supporting a synchronous communication mode,
- the method comprises steps consisting in:
a) associating, with each movement control axis (A1-A6; X, Y, Z, Rx, Ry, Rz) of the robot arm (4), a notional axis controller supposed to receive movement instructions emitted by a path generator (34) of the control center (8) and control at least one motor according to these instructions;
b) calculating, at the control center (8) and for each movement control axis (A1-A6; X, Y, Z, Rx, Ry, Rz) of the robot arm (4), instructions (C₁ᵢ) intended for the notional axis controller corresponding to each of these axes;
c) transmitting, through the filed bus (14), the instructions (C₁ᵢ) determined at step b), from the control center (8) to a single computing unit (10) belonging to the device (6) controlling the robot arm (4).

2. Control method according to claim 1, **characterised in that** each movement control axis of the robot arm (4) corresponds to a degree of freedom (A1-A6) of the robot arm.

3. Control method according to claim 1, **characterised in that** each movement control axis of the robot arm (4) corresponds to a cartesian axis (X, Y, Z) or a corresponding rotation (Rx, Ry, Rz) moving the end of the robot arm.

4. Control method according to one of the preceding claims, **characterised in that** it comprises supplementary steps consisting in:
d) determining, in the computing unit (10) and from the instructions (C₁ᵢ) received from the control center (8), orders (O₁ᵢ, O₂ᵢ, O'ᵢ) for the motor (M1-M6) controlled by each motor controller (61-66);
e) transmitting to each motor controller (61-66) an order (O₁ᵢ, O₂ᵢ, O'ᵢ), determined at step d), for the motor (M1-M6) controlled by this motor controller.

5. Control method according to one of the preceding claims, **characterised in that** it comprises supplementary steps consisting in:
f) transmitting, from each motor controller (61-66) and to the computing unit (10) the position of the motor (M1-M6) that it is controlling;
g) calculating, in the computing unit (10) and on the basis of all the positions of the motors, the positions (Pᵢ) of each of the movement control axes of the robot arm (4);
h) transmitting to the control center (8) the positions (Pᵢ) of each of the control axes calculated at step g).

6. Control method according to claim 5, **characterised in that** it comprises supplementary steps consisting in:
i) calculating, in the computing unit (10) and on the basis of all the positions of the motors, the cartesian speed (V(B)) of a characteristic point (B);
j) comparing the calculated cartesian speed (V(B)) with a threshold value;
k) transmitting, from the computing unit (10) and to the control center (8), an alert signal if the cartesian speed (V(B)) is higher than the threshold value.

7. Control method according to claim 4, **characterised in that**, at step d), movement orders (O₁ᵢ) comprising the positions to be reached for each motor (M1-M6) in order to comply with the instructions (C₁ᵢ) sent by the control center (8) are calculated.

8. Control method according to claim 7, **characterised in that**, at step d), the calculation of the movement orders (O₁ᵢ) for each motor (M1-M6) is accompanied by a prediction (Fᵢ) of the torque to be supplied for each motor, based on the instructions (C₁ᵢ) sent by the control center (8).

9. Control method according to claim 8, **characterised in that** the instructions (C₁ᵢ) sent by the control center (8) contain information on the load transported for at least one movement control axis (A1-A6).

10. Control method according to one of claims 8 and 9, **characterised in that** the positions to be reached for each motor (M1-M6) in order to comply with the instructions (C₁ᵢ) sent by the control center (8) include a compensation (Δi) for the deformations of the robot arm (4) calculated from at least some of the torque predictions (Fi).

11. Control method according to one of the previous claims, **characterised in that** it comprises a step consisting in:
1) transmitting to the control center (8) a signal (T₀, T₃) representing the state of powering up of the robot arm (4), in which the robot arm (4) is respectively declared as ready to function or powered down only if all the motors (M1-M6) are powered up or powered down and braked.

12. Control method according to one of the preceding claims, **characterised in that** it comprises a step consisting in:
m) transmitting, from the computing unit (10) and to the control center (8), a signal (T₂) representing the state of functioning of all the parts of the robot arm (4), in which all the parts of the robot arm (4) are declared to be faulty if at least one of these parts is detected as not functioning.

13. Control method according to one of the previous claims, **characterised in that** the bus (14) functions on an interface model of the SERCOS type.

14. Control method according to claim 12, **characterised in that** the control center (8) communicates with the notional axis controllers associated with the movement control axes of the robot arm (4) using the commands of the "Profile drive" hardware profile.
